# EUROPEAN PATENT APPLICATION

(11) **EP 4 495 894 A1**
(43) Date of publication of application: **22.01.2025**
(21) Application number: 23186188.1
(22) Date of filing: 18.07.2023
(51) Int. Cl.: G06V 10/774, G06V 10/776, G06V 10/82

(54) **DEVICE AND METHOD FOR CLASSIFYING A DIGITAL IMAGE WITH AN IMAGE CLASSIFIER, FOR TRAINING THE IMAGE CLASSIFIER, AND FOR DETERMINING AN IMAGE DATASET FOR THE TRAINING**

(71) Applicant: Robert Bosch GmbH, 70442 Stuttgart (DE)
(72) Inventor: Blaiotta, Claudia, 70178 Stuttgart (DE); Schott, Lukas, 70178 Stuttgart (DE)

(57) **Abstract**

A device and method for classifying a digital image with an image classifier (202), wherein the method comprises providing (302) a class (206) representing an object, determining (304), depending on the class (206), a synthetic digital image (208) that comprises the object, training (402) the image classifier (202) to predict the class (206) representing the object depending on the synthetic digital image (208), and determining (504) a class with the image classifier (202) depending on the digital image. A device and method for training the image classifier, and for determining an image dataset for the training.

## Description

### Background

The invention relates to a device and method for classifying a digital image with an image classifier, for training the image classifier, and for determining an image dataset for the training.

Training of image classifiers uses annotated training data that comprises digital images of real world objects.

### Disclosure of the invention

A method for classifying a digital image with an image classifier wherein the method comprises providing a class representing an object, determining, depending on the class, a synthetic digital image that comprises the object, training the image classifier to predict the class representing the object depending on the synthetic digital image, and determining a class with the image classifier depending on the digital image. The image classifier is trained without digital images of real world object. The image classifier is trained without requiring an annotation of the synthetic digital images by a human.

For classifying or using digital images of real world objects, the method may comprise capturing the digital image with a sensor, in particular a camera, a radar sensor, a LiDAR sensor, an ultrasound sensor, an infrared sensor, or a thermal image sensor, or actuating a technical system, in particular a robot, preferably a vehicle, a household appliance, a power tool, a personal assist system or an access control system, depending on the class.

The method may comprise determining a plurality of synthetic digital images for the class or for a plurality of classes, and selecting the synthetic digital image for training the image classifier from the plurality of synthetic digital images.

Selecting the synthetic digital image may comprise determining with a pretrained image classifier that the object that the synthetic digital image comprises is the object represented by the class that is provided for determining the synthetic digital image. This confirms that the synthetic digital image that is used in the training represents the object of the class well.

A method for training an image classifier for classifying a digital image with the image classifier comprises providing a class representing an object, determining, depending on the class, a synthetic digital image that comprises the object, training the image classifier to predict the class representing the object depending on the synthetic digital image. This means, the training requires neither human annotations nor digital image input.

The method may comprise determining a plurality of synthetic digital images for the class or for a plurality of classes, and selecting the synthetic digital image for training the image classifier from the plurality of synthetic digital images.

Selecting the synthetic digital image may comprise determining with a pretrained image classifier that the object that the synthetic digital image comprises is the object represented by the class that is provided for determining the synthetic digital image. This confirms in the training that the synthetic digital image that is used in the training represents the object of the class well.

A method for determining an image dataset for training an image classifier may comprise providing a class representing an object, determining, depending on the class, a synthetic digital image that comprises the object and is labelled with the class, adding the synthetic digital image to the image dataset. This means, determining the image dataset requires neither human annotations nor digital image input.

The method may comprise determining a plurality of synthetic digital images for the class or for a plurality of classes, and selecting the synthetic digital image for the image dataset from the plurality of synthetic digital images.

Selecting the synthetic digital image may comprise determining with a pretrained image classifier that the object that the synthetic digital image comprises is the object represented by the class that is provided for determining the synthetic digital image. This confirms that the synthetic digital image that is in the image dataset represents the object of the class well.

A device wherein the comprises at least one processor and at least one memory that is configured to store instructions that, when executed by the at least one processor, cause the device to execute the method, and wherein the at least one processor is configured to execute the instructions. The device has advantages that correspond to the advantages of the method.

A computer program that comprises computer readable instructions that, when executed by a computer, cause the computer to execute the method, provides advantages that correspond to the advantages of the methods.

Further advantageous embodiments are derivable from the following description and the drawing. In the drawing:
- Fig. 1: schematically depicts a device,
- Fig. 2: schematically depicts an architecture,
- Fig. 3: schematically depicts a flow chart of a method for determining an image dataset,
- Fig. 4: schematically depicts a flow chart of a method for training an image classifier,
- Fig. 5: schematically depicts a flow chart of a method for classifying images.

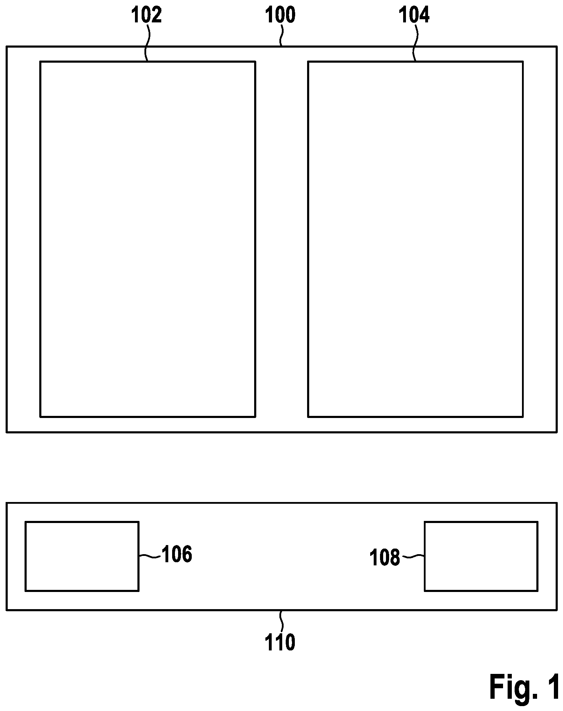

Figure 1 schematically depicts a device 100. The device 100 comprises at least one processor 102 and at least one memory 104 that is configured to store instructions that, when executed by the at least one processor 102, cause the device 100 to execute a method.

The at least one processor 102 is configured to execute the instructions.

The instructions according to one embodiment of the device 100 cause the device 100 to execute a method for classifying a digital image with an image classifier.

The instructions according to one embodiment of the device 100 cause the device 100 to execute a method for training the image classifier.

The instructions according to one embodiment of the device 100 cause the device 100 to execute a method for determining an image dataset for training the image classifier.

The device 100 may be configured for capturing the digital image with a sensor 106. The sensor 106 is for example a camera, a radar sensor, a LiDAR sensor, an ultrasound sensor, an infrared sensor, or a thermal image sensor.

The device 100 may be configured for actuating an actuator 108 of a technical system 110 depending on the class. The technical system 110 is for example a robot, preferably a vehicle, a household appliance, a power tool, a personal assist system or an access control system.

An example for actuating the technical system 110 is outputting the class, e.g., the text, on a human machine interface (not depicted). For a household appliance, e.g., a fridge, the class may for example represent a name of a produce, e.g., apple, that is captured by the sensor 106 inside the household appliance. For a household appliance, e.g., a cooker, the class may for example represent a name of cooking state, e.g., raw or cooked, of food in the cooker, that is captured by the sensor 106 inside the cooker.

An example for actuating the technical system 110 is moving the technical system 110 on a trajectory to avoid a collision with an object of a class that indicates that the object is an obstacle or on a trajectory to move over the object of a class that indicates that the object is suitable for moving over it.

An example for actuating the technical system 110 is opening the access for an object of a class that indicates that the object has access right or not opening the access otherwise.

In the example, the technical system 110 comprises the sensor 106 and the actuator 110. The device 100 may comprise the sensor 106 or the actuator 110 instead of the technical system 110. The technical system 110 may comprise the device.

The technical system 110 may comprise the trained image classifier or an image classifier that has the parameters and architecture of the trained classifier. The technical system 110 may be configured to capture a digital image with the sensor 106 and determine a class for the captured digital image with the trained image classifier and to actuate the actuator 108 depending on the class that is determined for the captured digital image with the trained image classifier.

The training of the image classifier may be separate from the use of the trained image classifier.

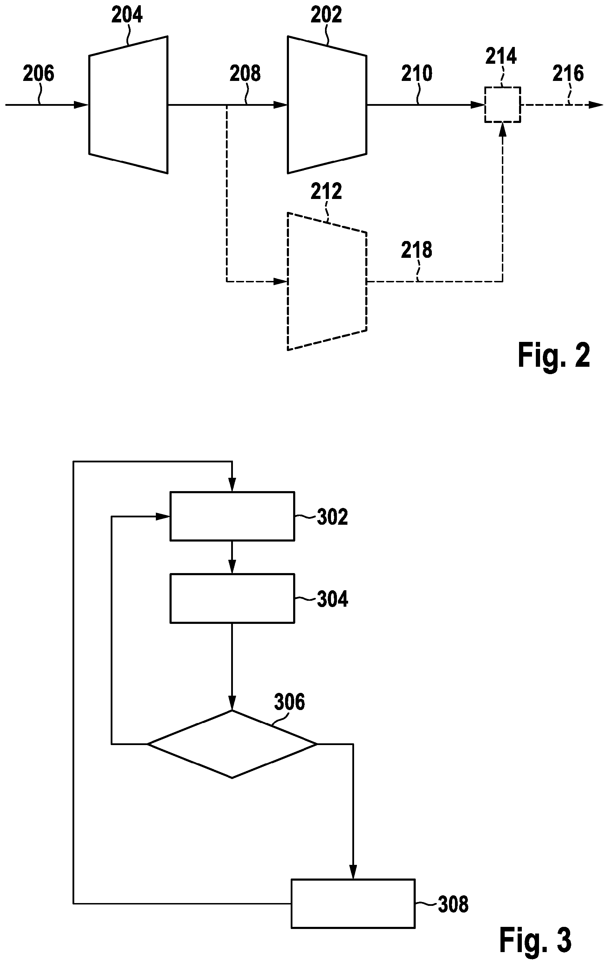

Figure 2 schematically depicts an architecture 200. The architecture 200 comprises an image classifier 202 and a generative model 204.

The generative model 204 is configured to determine depending on a class 206 representing an object, a synthetic digital image 208 that comprises the object.

The generative model 204 may be a model that is trained on a large amount of web-scraped data. The model may be a model of the family of diffusion probabilistic models, a class of latent variable models that can model an image data distribution by learning to denoise images corrupted by Gaussian noise. The generative model 204 may be a text-to-image model e.g., a Stable Diffusion model, e.g., DALL-E.

The image classifier 202 is configured to determine a class 210 for the synthetic digital image 208.

The architecture 200 may comprise a pretrained image classifier 212.

The pretrained image classifier 212 is trained for determining whether the object that the synthetic digital image comprises is the object represented by the class 206 that is provided for determining the synthetic digital image 208 or not.

The pretrained image classifier 212 may be a Vision-Language (VL) model like Contrastive Language-Image Pre-Training (CLIP).

The architecture 200 may comprise a selector 214 that is configured to select the synthetic digital image 208 for the image data set 216 depending on an output 218 of the pretrained image classifier 212. The selector 214 is for example configured to select the synthetic digital image 208 for the image data set 216 when the output 218 indicates that the synthetic digital image 208 comprises is the object represented by the class 206 that is provided for determining the synthetic digital image 208 and otherwise not select the synthetic digital image 210 for the image dataset 216.

According to an example, the class is a text, e.g., a string, that describes the object in natural language. An example for the text is a word, e.g., cat, dog, limousine, scooter. The text may be a phrase, a sentence or part of a sentence, e.g., "inside a limousine", "red scooter", "scooter in winter", "scooter at night", "scooter in an accident". The class may be a numeric or alphanumeric encoding of the text.

The training may use a training pipeline relying on a common optimizer, e.g., Adam. The training may train a plurality of instances of the image classifier until convergence, and select the best image classifier from the plurality.

Figure 3 depicts a flow chart of a method for determining the image dataset 216 for training the image classifier 202.

The method for determining the image dataset 216 comprises a step 302.

In step 302, the class 206 representing an object is provided.

The method for determining the image dataset 216 comprises a step 304.

In step 304, the synthetic digital image 208 that comprises the object and is labelled with the class 206 is determined depending on the class.

The method for determining the image dataset 216 optionally comprises a step 306.

In the step 306, the synthetic digital image 208 is either selected for the image dataset 216 or not. In the example, the synthetic digital image 208 is either selected for the image dataset 216 or not depending on the output 218 of the pretrained image classifier 212. In case the synthetic digital image 208 is selected for the image dataset 216, the step 308 is executed. Otherwise, the step 302 is executed.

The synthetic digital image 208 is for example selected for the image dataset 216 when the output 218 indicates that the synthetic digital image 208 comprises is the object represented by the class 206 that is provided for determining the synthetic digital image 208. The synthetic digital image 208 may otherwise not be select for the image dataset 216.

In the step 308, the synthetic digital image 208 is added to the image dataset 216.

Afterwards the step 302 is executed.

According to an example, a plurality of synthetic digital images 208 for the class or for a plurality of classes are determined, and either selected for training the image classifier or not.

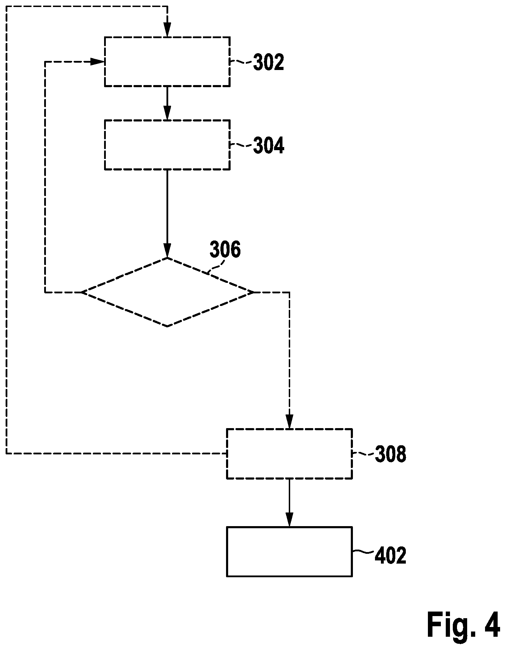

Figure 4 depicts a flow chart of a method for training the image classifier 202 for classifying a digital image with the image classifier 202.

The method for training the image classifier 202 comprises a step 402.

The step 402 comprises training the image classifier 202 with the image dataset 216. The image dataset 216 may be determined with the method for determining the image dataset 216. The method for training the image classifier 202 may comprise the method for determining the image dataset 216.

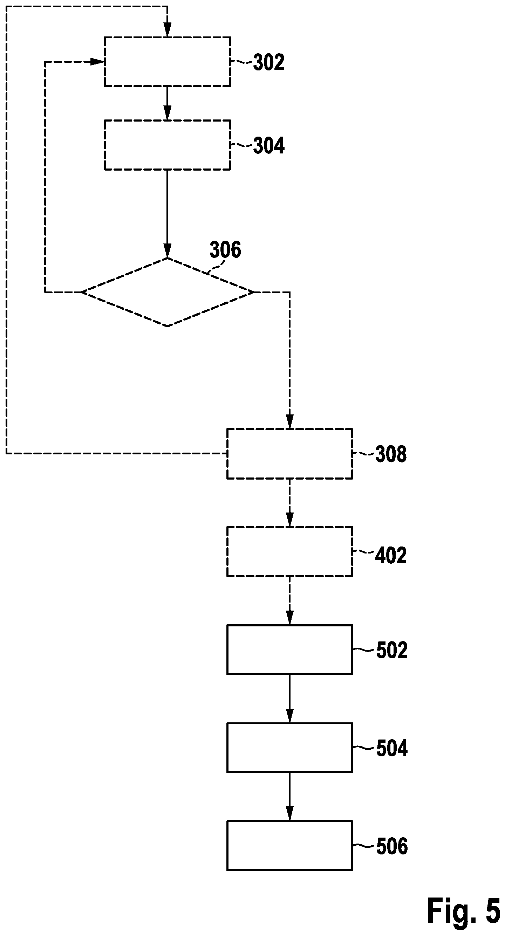

Figure 5 depicts a flow chart of a method for classifying a digital image with the image classifier 202.

The method for classifying digital image may comprise the method for determining the image dataset 216 and/or the method for training the image classifier 202.

The method for classifying digital images comprises a step 502.

The step 502 comprises capturing the digital image with the sensor 106.

The method for classifying digital images comprises a step 504.

The step 504 comprises determining a class with the image classifier 202 depending on the digital image.

The method for classifying digital images comprises a step 506.

The step 506 comprises actuating the technical system 110 depending on the class.

## Claims

1. A method for classifying a digital image with an image classifier (202), **characterized in that** the method comprises providing (302) a class (206) representing an object, determining (304), depending on the class (206), a synthetic digital image (208) that comprises the object, training (402) the image classifier (202) to predict the class (206) representing the object depending on the synthetic digital image (208), and determining (504) a class with the image classifier (202) depending on the digital image.

2. The method according to claim 1, **characterized in that** the method comprises capturing (502) the digital image with a sensor (106), in particular a camera, a radar sensor, a LiDAR sensor, an ultrasound sensor, an infrared sensor, or a thermal image sensor, or actuating (506) a technical system (110), in particular a robot, preferably a vehicle, a household appliance, a power tool, a personal assist system or an access control system, depending on the class.

3. The method according to claim 1 or 2, **characterized in that** the method comprises determining (304) a plurality of synthetic digital images (208) for the class (206) or for a plurality of classes, and selecting (306) the synthetic digital image for training the image classifier (202) from the plurality of synthetic digital images (208).

4. The method according to claim 3, **characterized in that** selecting (306) the synthetic digital image (208) comprises determining with a pretrained image classifier (212) that the object that the synthetic digital image comprises is the object represented by the class that is provided for determining the synthetic digital image (208).

5. A method for training an image classifier for classifying a digital image with the image classifier (202), **characterized in that** the method comprises providing (302) a class (206) representing an object, determining (304), depending on the class (206), a synthetic digital image (208) that comprises the object, training (402) the image classifier (202) to predict the class (206) representing the object depending on the synthetic digital image (208).

6. The method according to claim 5, **characterized in that** the method comprises determining (304) a plurality of synthetic digital images (208) for the class or for a plurality of classes, and selecting (306) the synthetic digital image (208) for training the image classifier (202) from the plurality of synthetic digital images (208).

7. The method according to claim 6, **characterized in that** selecting (306) the synthetic digital image (208) comprises determining with a pretrained image classifier (212) that the object that the synthetic digital image (208) comprises is the object represented by the class that is provided for determining the synthetic digital image (208).

8. A method for determining an image dataset (216) for training an image classifier (202), **characterized in that** the method comprises providing (302) a class (206) representing an object, determining (304), depending on the class (206), a synthetic digital image (208) that comprises the object and is labelled with the class (206), adding (308) the synthetic digital image (208) to the image dataset (216).

9. The method according to claim 8, **characterized in that** the method comprises determining (304) a plurality of synthetic digital images (208) for the class (106) or for a plurality of classes, and selecting (306) the synthetic digital image (208) for the image dataset (216) from the plurality of synthetic digital images.

10. The method according to claim 9, **characterized in that** selecting (306) the synthetic digital image comprises determining with a pretrained image classifier that the object that the synthetic digital image comprises is the object represented by the class that is provided for determining the synthetic digital image.

11. Device (100), **characterized in that** the device (100) comprises at least one processor (102) and at least one memory (104) that is configured to store instructions that, when executed by the at least one processor (102), cause the device (100) to execute the method according to one of the claims 1 to 10, wherein the at least one processor (102) is configured to execute the instructions.

12. Computer program, **characterized in that** the computer program comprises computer readable instructions that, when executed by a computer, cause the computer to execute the method according to one of the claims 1 to 10.

## Amended claims

### Amended claims in accordance with Rule 137(2) EPC.

1. A method for classifying a digital image with an image classifier (202), **characterized in that** the method comprises:
• Providing (302) a class (206) representing an object;
• Determining (304), depending on the class (206), a synthetic digital image (208) that comprises the object, wherein determining the synthetic digital image (208) comprises the steps of:
• Determining (304) a plurality of synthetic digital images (208) for the class (206) or for a plurality of classes; and
• Selecting (306) the synthetic digital image (208) from the plurality of synthetic digital images (208), wherein selecting (306) comprises determining with a pretrained image classifier (212) that the object that the synthetic digital image comprises is the object represented by the class that is provided for determining the synthetic digital image (208);
• Training (402) the image classifier (202) to predict the class (206) representing the object depending on the synthetic digital image (208); and
• Determining (504) a class with the image classifier (202) depending on the digital image.

2. The method according to claim 1, **characterized in that** the method comprises capturing (502) the digital image with a sensor (106), in particular a camera, a radar sensor, a LiDAR sensor, an ultrasound sensor, an infrared sensor, or a thermal image sensor, or actuating (506) a technical system (110), in particular a robot, preferably a vehicle, a household appliance, a power tool, a personal assist system or an access control system, depending on the class.

3. A method for training an image classifier for classifying a digital image with the image classifier (202), **characterized in that** the method comprises providing (302) a class (206) representing an object, determining (304), depending on the class (206), a synthetic digital image (208) that comprises the object, training (402) the image classifier (202) to predict the class (206) representing the object depending on the synthetic digital image (208).

4. The method according to claim 3, **characterized in that** the method comprises determining (304) a plurality of synthetic digital images (208) for the class or for a plurality of classes, and selecting (306) the synthetic digital image (208) for training the image classifier (202) from the plurality of synthetic digital images (208).

5. The method according to claim 4, **characterized in that** selecting (306) the synthetic digital image (208) comprises determining with a pretrained image classifier (212) that the object that the synthetic digital image (208) comprises is the object represented by the class that is provided for determining the synthetic digital image (208).

6. A method for determining an image dataset (216) for training an image classifier (202), **characterized in that** the method comprises providing (302) a class (206) representing an object, determining (304), depending on the class (206), a synthetic digital image (208) that comprises the object and is labelled with the class (206), adding (308) the synthetic digital image (208) to the image dataset (216).

7. The method according to claim 6, **characterized in that** the method comprises determining (304) a plurality of synthetic digital images (208) for the class (106) or for a plurality of classes, and selecting (306) the synthetic digital image (208) for the image dataset (216) from the plurality of synthetic digital images.

8. The method according to claim 7, **characterized in that** selecting (306) the synthetic digital image comprises determining with a pretrained image classifier that the object that the synthetic digital image comprises is the object represented by the class that is provided for determining the synthetic digital image.

9. Device (100), **characterized in that** the device (100) comprises at least one processor (102) and at least one memory (104) that is configured to store instructions that, when executed by the at least one processor (102), cause the device (100) to execute the method according to one of the claims 1 to 8, wherein the at least one processor (102) is configured to execute the instructions.

10. Computer program, **characterized in that** the computer program comprises computer readable instructions that, when executed by a computer, cause the computer to execute the method according to one of the claims 1 to 8.
